# EUROPÄISCHE PATENTSCHRIFT

(11) **EP 3 297 916 B1**
(45) Veröffentlichungstag und Bekanntmachung des Hinweises auf die Patenterteilung: **24.08.2022**
(21) Anmeldenummer: 16723121.6
(22) Anmeldetag: 18.05.2016
(51) Int. Cl.: B64D 11/06

(54) **FLUGZEUGSITZ UND VERFAHREN ZUM VERSTELLEN EINES FLUGZEUGSITZES**
AIRCRAFT SEAT AND METHOD FOR ADJUSTING AN AIRCRAFT SEAT
SIÈGE D'AÉRONEF ET PROCÉDÉ D'AJUSTAGE D'UN SIÈGE D'AÉRONEF

(30) Priorität: 18.05.2015 DE 102015209075
(43) Veröffentlichungstag der Anmeldung: 28.03.2018
(73) Patentinhaber: Lufthansa Technik AG, 22335 Hamburg (DE)
(72) Erfinder: THOMASCHEWSKI, Oliver, 22846 Norderstedt (DE)
(74) Vertreter: Müller Verweyen
(86) Internationale Anmeldenummer: PCT/EP2016/061059
(87) Internationale Veröffentlichungsnummer: WO 2016/184876

(56) Entgegenhaltungen:
- EP-A1- 2 602 189
- WO-A1-02/16161
- DE-A1-102013 212 976
- DE-T2- 60 006 419
- US-A- 3 793 903

## Beschreibung

Die vorliegende Erfindung betrifft einen Flugzeugsitz und ein Verfahren zum Verstellen eines Flugzeugsitzes mit den Merkmalen der Oberbegriffe von Anspruch 1 und 12.

Flugzeugsitze mit verstellbaren Sitzelementen, wie beispielsweise Rückenlehnen, Armlehnen, Beinstützen oder Sitzflächen, sind allgemein bekannt. Die Verstellung ist eine relative Positions- und/oder Ausrichtungsänderung von zwei oder mehr Sitzelementen. Dies kann beispielsweise das Einstellen des Winkels einer Rückenlehne zu einer Sitzfläche oder das Hochstellen der Beinstütze gegenüber der Sitzfläche umfassen. Die Verstellung eines ersten Sitzelements gegenüber einem zweiten Sitzelement kann durch eine Drehung um eine Achse, die Verschiebung entlang einer Achse oder die Verstellung entlang einer Trajektorie erfolgen. Weiterhin werden Sitzelemente, insbesondere die Sitzfläche, gegenüber einer Sitzbasis bzw. einem Sitzgestell verstellt, welches am Kabinenboden fixiert ist; diese sind im Sinne dieser Anmeldung ebenfalls als Sitzelemente anzusehen.

Die Verstellung von Sitzelementen wird durch Verstelleinrichtungen ermöglicht, welche die Relativbewegung von zwei oder mehr Sitzelementen eines Flugzeugsitzes zueinander in bestimmten Grenzen ermöglichen.

Flugzeugsitze mit normalem Komfortlevel, welche für eine möglichst dichte Bestuhlung in einem Flugzeug vorgesehen sind, weisen üblicherweise mechanische Verstelleinrichtungen für Sitzelemente auf, welche durch einen Sitzenden mittels eines Bedienhebels oder -knopfes aus einer blockierten Stellung gelöst werden können. Der Bedienhebel ist für die mechanische Übertragung der Entriegelungskraft über Seilzüge, Gestänge oder Hydraulikleitungen mit der Verstelleinrichtung und einem entsprechenden Blockierelement verbunden. Das Blockierelement kann je nach Schaltstellung die Bewegung verschiedener Sitzelemente relativ zueinander blockieren oder freigeben.

Die mechanische Übertragung der Entriegelungskraft ist aufgrund der zu überbrückenden Strecken zwischen einem Bedienhebel, z.B. am Ende einer Armlehne, und einer Verstelleinrichtung, z.B. am Gelenk zwischen Sitzfläche und Rückenlehne, in der Ausführung aufwendig. Weiterhin müssen mögliche Übergänge zwischen Sitzelementen und Richtungswechsel bei der Kraftübertragung mit engen Radien, z.B. am Übergang einer Armlehne an einer Rückenlehne, überbrückt werden. Derartige Übergänge können weiterhin als Gelenk ausgeführt sein, wodurch die mechanische Kraftübertragung ebenfalls aufwendig gelenkig ausgeführt werden muss und entsprechend viel Bauraum einnimmt, was die Gestaltungsfreiheit für die Flugzeugsitze stark einschränkt.

Weiterhin können derartige Mechaniken stark reibungsbehaftet sein, so dass sie für einen Bediener insbesondere nach einer großen Lebensdauer schwergängig zu bedienen sind. Zur mechanischen Kraftübertragung können beispielsweise Bowdenzüge oder hydraulische Systeme angewendet werden.

Aus der DE 10 2013 212 976 A1 ist ein Flugzeugsitz mit einer Verstelleinrichtung bekannt, bei der ein Bedienelement vorgesehen ist, wobei das Bedienelement ein elektronischer und/oder elektrischer Schalter ist. Das Blockierelement kann dann elektronisch über einen Steller, der durch das Bedienelement angesteuert wird, betätigt werden, so dass auf Mittel zur mechanischen Kraftübertragung zwischen dem Bedienelement und dem Blockierelement verzichtet werden kann.

Weiter ist aus der EP 2 602 189 A1 ein Sitzsystem bekannt, das ein elektronisches Entsperren eines Stellantriebs ermöglicht, so dass das Sitzsystem in eine für den Passagier gewünschte Position verstellt werden kann.

Die aus dem Stand der Technik bekannten Lösungen bieten damit entweder die Möglichkeit, die Verstelleinrichtung zu aktivieren oder zu deaktivieren. Es wirkt dadurch auf das zu verstellende Sitzelement entweder eine maximale von der Verstelleinrichtung bereitgestellte Verstellkraft, oder die Verstellkraft wird vollständig deaktiviert. In dem deaktivierten Zustand ist dann auch keine Verstellung des Sitzelements möglich. Nachteilig an diesen bekannten Lösungen ist, dass folglich während einer Verstellbewegung stets die maximale Kraft auf das zu verstellende Sitzelement wirkt.

Demgegenüber existieren Flugzeugsitze, welche elektrisch angetriebene Verstelleinrichtungen umfassen. Diese ermöglichen eine Verstellung von Sitzelementen durch Stellantriebe. Die Stellantriebe werden elektronisch angesteuert und können von einem Sitzenden mittels Steuertasten gesteuert werden. Der Winkel einer Rückenlehne zu einer Sitzfläche kann auf diese Weise beispielsweise elektrisch verstellt bzw. verändert werden. Die Stellantriebe sind so ausgelegt, dass ein oder mehrere Sitzelemente auch gegen das Gewicht eines Sitzenden verstellt werden können. Weiterhin müssen die Stellantriebe derart ausgelegt werden, dass sie in einem Crashfall die auftretenden Lasten sicher ertragen können. Die Stellmotoren sind aufgrund dieser Anforderungen schwer und auch teuer. Zudem schränkt die notwendige Größe der Stellmotoren die Gestaltungsfreiheit eines Flugzeugsitzes bei der Integration ein. Sofern an einem Flugzeugsitz mehrere verstellbare Sitzelemente vorgesehen sind, muss aufwendig sichergestellt werden, dass keine Kombination von Stellungen der Sitzelemente angefahren werden kann, welche einen Sitzenden einklemmen oder verletzen könnte.

Aus der DE 600 06 419 T2 ist ein Bewegungssteuerungssystem für einen oder mehrere Kraftfahrzeugsitze bekannt. Das Steuerungssystem umfasst eine zwischen einem ersten und zweiten Element angeordnete Verbindung und Aktuatormittel zur Begrenzung der Bewegung der beiden Elemente zueinander.

Es ist Aufgabe der Erfindung, einen Flugzeugsitz mit einem Federelement und ein Verfahren bereitzustellen, bei dem eine verbesserte Einstellbarkeit der auf die verstellbare Sitzfläche wirkenden Kraft möglich ist.

Die Aufgabe wird durch die Merkmale der unabhängigen Ansprüche gelöst.

Gemäß dem Grundgedanken der Erfindung wird ein Flugzeugsitz mit einem ersten und einem zweiten Sitzelement vorgeschlagen, wobei das zweite Sitzelement gegenüber dem ersten Sitzelement verstellbar gelagert ist, wobei ein das zweite Sitzelement gegenüber dem ersten Sitzelement bewegendes Federelement vorgesehen ist, wobei durch ein Stellelement die durch das Federelement auf das zweite Sitzelement wirkende Kraft freigebbar ist, so dass in einer ersten Schaltstellung des Stellelements das Federelement deaktiviert ist und in einer zweiten Schaltstellung des Stellelements das Federelement aktiviert ist, wobei ein Kraftbegrenzungselement vorgesehen ist, mit dem die durch das Federelement auf das zweite Sitzelement wirkende Kraft auf einen vorbestimmten Wert begrenzbar ist, so dass auch Zwischenzustände zwischen der ersten und der zweiten Schaltstellung einstellbar sind.

Unter dem Federelement im Sinne der Erfindung ist vorzugsweise eine Gasdruckfeder zu verstehen, weiter vorzugsweise ein Druckspeicher, eine Spiralfeder oder allgemein ein mechanisches Element mit einer Rückstellkraft. Das Federelement speichert dabei die Energie, die beim Verstellen des Sitzelements in einer ersten Richtung durch den Passagier auf das Sitzelement ausgeübt wird. Die gespeicherte Energie wird dann zur Unterstützung einer Bewegung des Sitzelements in eine zweite Richtung, die der ersten Bewegung entgegengerichtet ist, bei einer Aktivierung des Federelements wieder freigegeben.

Vorzugsweise handelt es sich bei dem ersten Sitzelement um eine Sitzfläche und bei dem zweiten Sitzelement um eine Rückenlehne, so dass bei einer Aktivierung des Federelements eine Aufrichtbewegung des Passagiers aus einer Liegeposition in eine Sitzposition unterstützt werden kann. Das erste und zweite Sitzelement kann aber auch durch andere Sitzelemente, wie beispielsweise durch eine Armlehne, gebildet werden.

Das Federelement ist dabei vorzugsweise so eingerichtet, dass die auf das Sitzelement wirkende Kraft durch den Passagier in einfacher Weise übersteuert bzw. überdrückt werden kann. Andererseits muss das Federelement eine ausreichend große Maximalkraft Fₘₐₓ aufweisen, um alle erforderlichen Verstellbewegungen, wie z.B. auch die Verstellung einer Rückenlehne aus der Liegeposition in die Sitzposition, ausführen zu können.

Durch die erfindungsgemäße Lösung ist es möglich, dass die Verstellkraft des Federelements beliebige Werte annehmen kann, die insbesondere auch kleiner sein können als die maximal durch das Federelement aufbringbare Kraft Fₘₐₓ. Ferner können diese Kräfte zwischen 0 und der Maximalkraft Fₘₐₓ auch gezielt eingestellt werden. Federelemente, die nicht derart eingerichtet oder betätigbar sind, dass sich ohne eine gezielte Steuerung Kraftwerte zwischen 0 und der Maximalkraft Fₘₐₓ einstellen lassen, was beispielsweise während der Lösebewegung von Gasdruckfedern beim Öffnen eines Auslöseventils unbeabsichtigt der Fall sein kann, sind nicht als erfindungsgemäß anzusehen.

Durch das Kraftbegrenzungselement kann die durch das Federelement auf das zweite Sitzelement ausgeübte Kraft so eingestellt werden, dass sich ein für den Passagier angenehmes Bewegungsverhalten des Sitzelements ergibt. Dabei lässt sich durch das Kraftbegrenzungselement das Bewegungsverhalten von Verstellbewegungen mit translatorischen und/oder rotatorischen Bewegungsanteilen einstellen. Ein Beispiel für eine translatorische Bewegung eines Sitzelements ist eine höhenverstellbare Kopfstütze. Durch diese Einstellbarkeit kann der Passagier beispielsweise mit einer vorbestimmten Kraft bei einer Aufrichtbewegung von einer Liegeposition in eine Sitzposition unterstützt werden. Gleichzeitig ist es aber auch möglich, dass bei einer Verstellbewegung von der Sitzposition in die Liegeposition durch das Federelement eine geeignete Gegenkraft eingestellt wird, so dass sich für den Passagier eine sanfte Bewegung in die Liegeposition ergibt, bei der er durch die Kraftwirkung des Federelements auch unterstützt wird. Anders gesagt: Der Passagier fällt durch die Kraftwirkung des Federelements nicht in die Liegeposition. Vorzugsweise kann das Kraftbegrenzungselement auch durch ein Dämpfungselement gebildet sein.

Vorzugsweise können in Abhängigkeit der Verstellbewegung des ersten Sitzelements gegenüber dem zweiten Sitzelement verschiedene Kraftwerte eingestellt werden. Ein für den Passagier hochwertiges Bewegungsverhalten der verstellbaren Sitzelemente kann damit durch die erfindungsgemäße Lösung auch ohne elektrisch angetriebene Verstelleinrichtung erreicht werden.

Weiter wird vorgeschlagen, dass das Kraftbegrenzungselement durch das Stellelement gebildet ist. Es kann so auf ein separates Kraftbegrenzungselement verzichtet werden. Das Stellelement ist dann vorzugsweise derart eingerichtet, dass durch das Federelement nur eine vorbestimmte Kraft mit beliebigen Werten von 0 bis Fₘₐₓ freigegeben werden kann. Bei der Verwendung einer Gasdruckfeder als Federelement wird das Stellelement vorzugsweise durch ein Auslöseventil gebildet, so dass je nach Stellung des Auslöseventils, durch das vorzugsweise eine erste Gasdruckkammer mit einer zweiten Gasdruckkammer der Gasdruckfeder verbindbar ist, die durch das Federelement auf das Sitzelement wirkende Kraft einstellbar ist. In einer bevorzugten Ausführungsform wird das Auslöseventil der Gasdruckfeder über einen Servomotor gesteuert. Vorzugsweise kann dafür als zuverlässige und kostengünstige Lösung ein Servomotor beispielsweise aus dem Modellbaubereich verwendet werden.

Ferner wird vorgeschlagen, dass in der ersten Schaltstellung des Stellelements eine Bewegung des ersten Sitzelements gegenüber dem zweiten Sitzelement blockiert ist.

Das bedeutet, dass in einer zweiten Schaltstellung ein eingestellter Wert des Federelements auf das zweite Sitzelement wirkt. In der ersten Schaltstellung ist das zweite Sitzelement gegenüber dem ersten Sitzelement arretiert, so dass eine ungewünschte Verstellung verhindert wird.

Das Blockieren des zweiten Sitzelements gegenüber dem ersten Sitzelement erfolgt vorzugsweise durch das Kraftbegrenzungselement. Ist das Kraftbegrenzungselement durch das Stellelement gebildet, beispielsweise durch das Auslöseventil einer Gasdruckfeder, so erfolgt die Arretierung automatisch in der ersten Schaltstellung, in der vorzugsweise ein Überströmen eines Fluids von der ersten Gasdruckkammer in die zweite Gasdruckkammer durch das Auslöseventil verhindert wird. Die Gasdruckfeder übt so zwar keine Kraft auf das zweite Sitzelement aus, kann aber andererseits auch nicht verstellt werden, was eine Arretierung des zweiten Sitzelements gegenüber dem ersten Sitzelement zur Folge hat.

Ferner wird eine zusätzliche Verriegelungseinrichtung vorgeschlagen, durch die die Bewegung des zweiten Sitzelements gegenüber dem ersten Sitzelement blockierbar ist.

Dadurch kann eine zuverlässige Arretierung erreicht werden, wenn das Kraftbegrenzungselement und/oder das Federelement nicht dazu eingerichtet ist, eine Bewegung des ersten Sitzelements gegenüber dem zweiten Sitzelement zu verhindern. Die zusätzliche Verriegelungseinrichtung kann aber auch als redundante Verriegelungseinrichtung vorgesehen sein.

Vorzugsweise ist das Kraftbegrenzungselement dazu eingerichtet, der durch das Federelement auf das zweite Sitzelement wirkenden Kraft entgegenzuwirken.

Das Kraftbegrenzungselement ist vorzugsweise durch ein Bremselement gebildet, das der axialen Verschiebung des Federelements entgegenwirkt. Alternativ kann das Federelement auch durch zwei oder mehrere Unterfederelemente gebildet sein, wobei wenigstens zwei Unterfederelemente derart ausgerichtet sind, dass sie entgegengesetzt zueinander wirken. Weiter vorzugsweise sind die entgegengesetzt wirkenden Federelemente dann in Gruppen oder einzeln aktivier- bzw. deaktivierbar, so dass die auf das Sitzelement wirkende Kraft einstellbar ist.

Es wird weiter vorgeschlagen, dass das Kraftbegrenzungselement über eine Bedieneinheit elektrisch betätigbar ist.

Es kann so auf eine mechanische, hydraulische und/oder pneumatische Betätigungseinrichtung verzichtet werden. Durch die elektronische Betätigung des Kraftbegrenzungselements muss lediglich ein Kabel von der Bedieneinheit zu dem Kraftbegrenzungselement verlegt werden. Alternativ ist auch eine drahtlose Betätigung des Kraftbegrenzungselements möglich. Anders als beispielsweise bei einer mechanischen Betätigung über einen Bowdenzug müssen so beispielsweise keine Mindestradien eingehalten werden, so dass das Design des Flugzeugsitzes nicht oder nur gering beeinflusst wird. Ferner ist eine nahezu beliebige Anordnung der Bedieneinheit an dem Flugzeugsitz möglich.

Erfindungsgemäß ist eine elektronische Steuer- bzw. Regeleinheit vorgesehen, die dazu eingerichtet ist, das Kraftbegrenzungselement zu betätigen.

Es wird dadurch ermöglicht, das Verstellverhalten des zweiten Sitzelements gegenüber dem ersten Sitzelement in Abhängigkeit einer oder mehrerer Zustandsgrößen zu steuern bzw. zu regeln. Vorzugsweise ist die elektronische Steuer- bzw. Regeleinheit durch einen Mikrocontroller gebildet.

Weiter ist es vorteilhaft, wenn die Steuer- bzw. Regeleinheit mit wenigstens einem Sensor verbunden ist, der Zustandsgrößen des Flugzeugsitzes erfasst, wobei der Sensor vorzugsweise durch einen Winkelsensor, einen Wegsensor, einen Kraftsensor und/oder einen Beschleunigungssenor gebildet ist. Vorzugsweise ist der Winkelsensor durch ein Drehpotentiometer gebildet.

Dadurch lassen sich auf einfache Weise Zustandsgrößen des Flugzeugsitzes, beispielsweise der Relativwinkel oder der Abstand zweier Sitzelemente zueinander, bestimmen. Vorzugsweise kann zur Messung eines Verstellwinkels einer Rückenlehne gegenüber einer Sitzfläche ein Winkelsensor verwendet werden. Durch solch einen Sensor lässt sich dann beispielsweise auch die Drehgeschwindigkeit bzw. die Drehbeschleunigung bei einer Verstellbewegung der Rückenlehne gegenüber der Sitzfläche bestimmen.

Vorzugsweise weist die Steuer- bzw. Regeleinheit eine Schnittstelle zum Empfangen von externen Signalen auf. Es können so beispielsweise Signale des Luftfahrzeugs empfangen werden, die durch die Steuer- bzw. Regeleinheit ausgewertet werden können. Es können so beispielsweise im Falle von Turbulenzen oder während der Start- und/oder Landephase von dem Luftfahrzeug ein Signal an die Steuer- bzw. Regeleinheit gesendet werden. Dieses Signal wird dann von der Steuer- bzw. Regeleinheit verarbeitet und das Kraftelement derart betätigt, dass eine Verstellung des zweiten Sitzelements gegenüber dem ersten Sitzelement nicht mehr möglich ist.

Weiter kann die Steuer- bzw. Regeleinheit vorzugsweise auch mit einem Beschleunigungssensor verbunden sein, so dass automatisch von der Steuer- bzw. Regeleinheit detektiert werden kann, wenn ein kritischer Flugzustand vorliegt.

Erfindungsgemäß ist das Kraftbegrenzungselement durch die Steuer- bzw. Regeleinheit in Abhängigkeit der Verstellposition, der Verstellgeschwindigkeit und/oder der Verstellbeschleunigung des zweiten Sitzelements betätigbar.

Das Kraftbegrenzungselement kann damit in Abhängigkeit eines Betriebszustandes des Flugzeugsitzes betätigt werden, so dass die durch das Federelement auf das zu verstellende Sitzelement wirkende Kraft in Abhängigkeit der Verstellposition und/oder der Verstellgeschwindigkeit einstellbar ist.

Vorzugsweise kann im Falle einer rotatorischen Verstellbewegung der Rückenlehne gegenüber der Sitzfläche eine Einstellbarkeit des Kraftbegrenzungselements in Abhängigkeit des Verstellwinkels der Rückenlehne gegenüber der Sitzfläche erzielt werden. Das ist vorteilhaft, weil beispielsweise bei einer Verstellbewegung der Rückenlehne von einer Liegeposition in eine Sitzposition zu Beginn der Verstellbewegung eine hohe Kraft des Federelements erforderlich ist. Das ergibt sich aus der eingangs erläuterten Problematik eines kleinen Hebelarms in der Liegeposition und der großen Kraft F₁, die auf die Rückenlehne wirkt und durch die Gewichtskraft des Passagiers bzw. der Rückenlehne selbst hervorgerufen wird. Mit einer zunehmenden Aufrichtung der Rückenlehne in die Sitzposition vergrößert sich der Hebelarm, wodurch das Federelement zum Erreichen des gleichen Drehmoments eine geringere Kraft liefern muss als in der Liegeposition.

Diesen Anforderungen an den Kraftverlauf des Federelements kann durch eine Betätigung des Kraftbegrenzungselements in Abhängigkeit des Verstellwinkels Rechnung getragen werden. Diese Abhängigkeit der Betätigung des Kraftbegrenzungselements von einer Verstellposition kann auch auf beliebige andere zu verstellende Sitzelemente, wie beispielsweise Armlehnen, Beinstützen oder Sitzflächen, angewendet werden. Die Verstellbewegung kann dabei translatorische und/oder rotatorische Bewegungskomponenten aufweisen.

Ferner ist es möglich, das Kraftbegrenzungselement in Abhängigkeit der Verstellgeschwindigkeit zu steuern. Dabei kann beispielsweise eine maximale Verstellgeschwindigkeit definiert werden. Weiter vorzugsweise kann der Maximalwert für die Verstellgeschwindigkeit auch in Abhängigkeit der Verstellposition festgelegt werden. Vorzugsweise ist dann der Maximalwert der Verstellgeschwindigkeit kurz vor Erreichen einer Endposition des Sitzelements, beispielsweise der Liege- oder Sitzposition, möglichst gering, wodurch ein für den Passagier unangenehmes Anschlagen des Sitzelements in der Endposition vermieden werden kann.

Ferner ist es vorteilhaft, wenn die Schnittstelle mit einem Näherungssensor verbunden ist. Vorzugsweise handelt es sich bei dem Näherungssensor um einen Sensor, mit dem eine drohende Kollision des sich bewegenden Sitzelements mit Hindernissen in der Umgebung detektiert werden kann. Es kann so beispielsweise verhindert werden, dass das verstellbare Sitzelement gegen einen Passagier stößt. Vorzugsweise ist der Näherungssensor durch einen Ultraschallsensor gebildet.

Es wird weiter vorgeschlagen, dass das Kraftbegrenzungselement durch die Steuer- bzw. Regeleinheit derart betätigbar ist, dass eine Bewegung des Federelements nur in eine vordefinierbare Richtung möglich ist.

Das Bedienelement dient vorzugsweise dazu, einzustellen, in welche Bewegungsrichtung der Passagier das zweite Sitzelement gegenüber dem ersten Sitzelement verstellen möchte; diese Information wird dann an die Steuer- bzw. Regeleinheit übermittelt und dort verarbeitet. Zum Detektieren der Bewegungsrichtung dient vorzugsweise der Winkelsensor. Alternativ oder zusätzlich kann die Detektion auch über einen Beschleunigungssensor erfolgen.

Es wird dann vorzugsweise durch die Steuer- bzw. Regeleinheit geprüft, ob die tatsächliche Bewegungsrichtung mit der eingestellten Bewegungsrichtung übereinstimmt. Ist das der Fall, wirkt das Kraftbegrenzungselement derart, dass eine Verstellung des zweiten Sitzelements gegenüber dem ersten Sitzelement unter Beaufschlagung einer eingestellten Kraft des Federelements möglich ist. Wird durch die Steuer- bzw. Regeleinheit detektiert, dass die tatsächliche Bewegungsrichtung von der vorausgewählten Bewegungsrichtung abweicht, so wird das Kraftbegrenzungselement vorzugsweise derart betätigt, dass eine Bewegung des zweiten Sitzelements gegenüber dem ersten Sitzelement nicht mehr möglich ist. Alternativ kann auch über die zusätzliche Verriegelungseinrichtung die Verstellbewegung des ersten Sitzelements gegenüber dem zweiten Sitzelement verhindert werden. Es kann so sichergestellt werden, dass die Verstellung des zweiten Sitzelements nur in die vorausgewählte Richtung möglich ist.

Weiter kann die richtungsabhängige Betätigung vorzugsweise dazu genutzt werden, beim Vorliegen eines externen Signals, das einen kritischen Flugzustand anzeigt, nur eine Verstellbewegung des jeweiligen Sitzelements in eine sichere Sitzposition zuzulassen. Am Beispiel der gegenüber der Sitzfläche verstellbaren Rückenlehne könnte das eine Verstellbewegung sein, die nur in Richtung der Sitzposition möglich ist. Sobald die Sitzposition erreicht ist, wird die Rückenlehne gegenüber der Sitzfläche arretiert.

Erfindungsgemäß wird weiter ein Verfahren zum Verstellen eines Flugzeugsitzes vorgeschlagen mit einem ersten und einem zweiten Sitzelement, wobei das zweite Sitzelement gegenüber dem ersten Sitzelement verstellbar gelagert ist, wobei ein das zweite Sitzelement gegenüber dem ersten Sitzelement bewegendes Federelement vorgesehen ist, wobei durch ein Stellelement die durch das Federelement auf das zweite Sitzelement wirkende Kraft freigegeben wird, so dass in einer ersten Schaltstellung des Stellelements das Federelement deaktiviert und in einer zweiten Schaltstellung des Stellelements das Federelement aktiviert wird, wobei die durch das Federelement auf das zweite Sitzelement wirkende Kraft auf einen vorbestimmten Wert begrenzt wird, so dass auch Zwischenzustände zwischen der ersten und der zweiten Schaltstellung einstellbar sind.

Durch dieses Verfahren wird eine für den Passagier angenehme Verstellcharakteristik der verstellbaren Sitzelemente erreicht. Beispielsweise kann das auch dadurch erreicht werden, dass das Federelement durch mehrere Unterfederelemente gebildet ist, die in einer Reihen- oder Parallelschaltung gleichgerichtet angeordnet sind. Das bedeutet, dass sie bei einer separaten Aktivierung eine Bewegung des zweiten Sitzelements in die identische Richtung bewirken würden. Durch eine Aktivier- bzw. Deaktivierbarkeit der Unterfederelemente in Gruppen oder einzeln kann somit eine Einstellbarkeit der auf das zu verstellende Sitzelement wirkenden Gesamtfederkraft erreicht werden.

Es wird weiter ein Flugzeugsitz mit einem ersten und einem zweiten Sitzelement vorgeschlagen, wobei das zweite Sitzelement gegenüber dem ersten Sitzelement verstellbar gelagert ist, wobei ein Kraftbegrenzungs- und/oder Dämpfungselement vorgesehen ist, mit dem einer auf das zweite Sitzelement wirkenden äußeren Kraft entgegengewirkt werden kann. Das Kraftbegrenzungs- bzw. Dämpfungselement ist dabei vorzugsweise so steuerbar, dass der durch den Passagier auf das zweite Sitzelement wirkenden Kraft mit einer einstellbaren Kraftwirkung entgegengewirkt werden kann.

Unter einer äußeren Kraft ist im Sinne dieser Anmeldung eine Kraft zu verstehen, die nicht durch eine Verstelleinrichtung, beispielsweise durch ein Aktuationselement, hervorgerufen wird, sondern eine Kraft, die vorzugsweise durch einen Passagier oder durch die Schwerkraft auf das Sitzelement wirkt.

Auf das Federelement wird in diesem Fall vollständig verzichtet, denn das zweite Sitzelement kann gegenüber dem ersten Sitzelement auch so gelagert sein, dass die Verstellbewegung nicht durch die Unterstützung des Federelements oder entgegen der Kraft des Federelements erfolgt. Dennoch kann durch das Kraftbegrenzungselement in diesem Fall beispielsweise eine ungewünschte zu schnelle Verstellbewegung verhindert werden. Das kann beispielsweise dann vorteilhaft sein, wenn sich eine höhenverstellbare Armlehne aufgrund der Schwerkraft zu schnell nach unten bewegt, wenn der Passagier diese loslässt. Durch ein Kraftbegrenzungselement, das vorzugsweise auch in Abhängigkeit der Verstellbewegung angesteuert werden kann, kann dieser negative Effekt behoben werden.

Zu dem Offenbarungsgehalt der Ausführung eines Flugzeugsitzes mit Kraftbegrenzungselement, aber ohne Federelement, sind ausdrücklich auch die vorangehend beschriebenen Merkmale zur Steuerung bzw. Regelung des Kraftbegrenzungselements für den Fall mit Federelement hinzuzuzählen.

Die Erfindung wird im Folgenden anhand bevorzugter Ausführungsformen unter Bezugnahme auf die beigefügten Figuren erläutert. Dabei zeigt
- Fig. 1: einen erfindungsgemäßen Flugzeugsitz in einer Liegeposition (links) und in einer Sitzposition (rechts);
- Fig. 2: einen erfindungsgemäßen Flugzeugsitz mit einer richtungsunabhängigen Bedieneinheit;
- Fig. 3: einen erfindungsgemäßen Flugzeugsitz mit einer richtungsabhängigen Bedieneinheit; und
- Fig. 4: einen erfindungsgemäßen Flugzeugsitz mit einer Steuer- bzw. Regeleinheit mit einer Schnittstelle zum Empfangen eines externen Signals von einem Beschleunigungssensor.

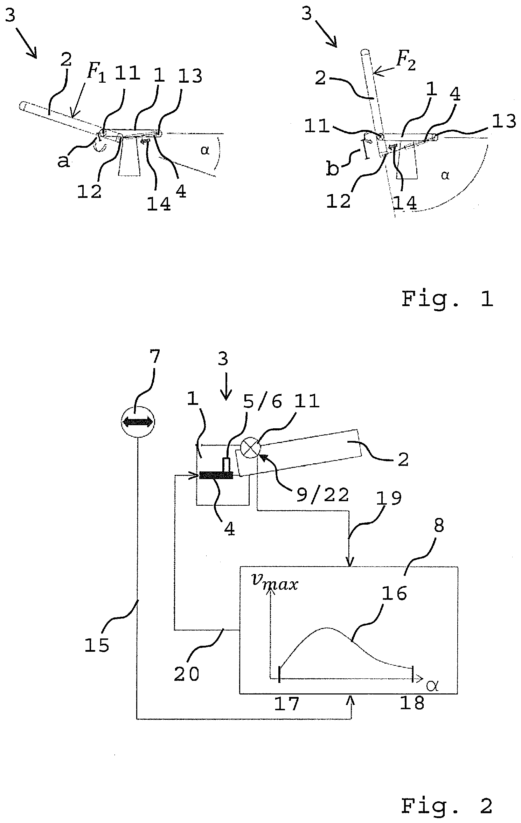

Fig. 1 zeigt einen erfindungsgemäßen Flugzeugsitz 3 in einer Liegeposition (links) und in einer Sitzposition (rechts). Der erfindungsgemäße Flugzeugsitz 3 umfasst ein erstes Sitzelement 1, das vorzugsweise durch eine Sitzfläche gebildet ist, und ein zweites Sitzelement 2, das vorzugsweise durch eine Rückenlehne gebildet ist. Zu dem Offenbarungsgehalt dieser Anmeldung sind jedoch auch beliebige andere relativ zueinander bewegbare Sitzelemente 2, 3 hinzuzurechnen.

Das zweite Sitzelement 2 ist gegenüber dem ersten Sitzelement 1 über eine Drehverbindung 11 rotatorisch gelagert. Ferner ist ein Federelement 4 vorgesehen, das vorzugsweise durch eine Gasdruckfeder gebildet ist. Alternativ kann das Federelement 4 vorzugsweise auch durch einen Druckspeicher, eine Spiralfeder oder allgemein durch ein mechanisches Element mit einer Rückstellkraft gebildet sein. Das Federelement 4 ist an einer ersten Befestigungsstelle 12 mit dem zweiten Sitzelement 2 und an einer zweiten Befestigungsstelle 13 mit dem ersten Sitzelement 1 verbunden. Das Federelement 4 ist derart eingerichtet, dass es im aktivierten Zustand eine Axialkraft in Richtung eines Pfeils 14 auf die erste Befestigungsstelle 12 ausübt.

Ferner sind in der Fig. 1 Kräfte F₁ und F₂ dargestellt, die aus einer Gewichtskraft eines in dem Flugzeugsitz 3 sitzenden Passagiers bzw. aus der Gewichtskraft des zweiten Sitzelements 2 selbst resultieren. Aus der Darstellung der Fig. 1 wird deutlich, dass die Kraft F₁ in der liegenden Position (links) größer ist als die Kraft F₂ in der sitzenden Position (rechts).

Weiter zeigt Fig. 1 die Längen a und b der Hebelarme einer durch das Federelement 4 an der ersten Befestigungsstelle 12 bezüglich der Drehverbindung 11 angreifenden Kraft. Aufgrund der Charakteristik des abgebildeten Verstellmechanismus ist die Länge des Hebelarms a in der liegenden Position (links) kleiner als die Länge des Hebelarms b in der sitzenden Position (rechts).

Wegen der höheren Kraft F₁ und der geringeren Länge des Hebelarms a, was bei gleicher Kraftwirkung des Federelements 4 auf die erste Befestigungsstelle 12 ein geringeres Drehmoment zur Verstellung des zweiten Sitzelements 2 zur Folge hat, muss das Federelement 4 in der liegenden Position eine höhere Kraft auf die erste Befestigungsstelle 12 aufbringen als in der sitzenden Position. Es ergeben sich damit in Abhängigkeit des Winkels a, der den Winkel zwischen dem ersten Sitzelement 1 und dem zweiten Sitzelement 2 angibt, variable Anforderungen an die Kraftwirkung des Federelements 4.

Die Kraftwirkung des Federelements 4 auf das erste Befestigungselement 12 ist daher über ein Kraftbegrenzungselement 6, siehe Fig. 2 bis Fig. 4, vorzugsweise in Abhängigkeit des Winkels α, betätigbar. Hierfür ist ein Sensor 9, siehe Fig. 2 bis Fig. 4, vorzugsweise ein Winkelsensor 22, an der Drehverbindung 11 vorgesehen, der dazu eingerichtet ist, den Winkel α zu detektieren.

Fig. 2 zeigt eine schematische Ausführungsform des erfindungsgemäßen Flugzeugsitzes 3. Wie in Fig. 1 ist das erste Sitzelement 1, das gegenüber dem zweiten Sitzelement 2 über die Drehverbindung 11 rotatorisch bewegbar ist, dargestellt. Vorzugsweise ist in räumlicher Nähe zu der Drehverbindung 11 der Winkelsensor 22 vorgesehen, um den Winkel α zwischen dem ersten und dem zweiten Sitzelement 1 und 2 zu detektieren. Vorzugsweise wird der Winkelsensor 22 durch ein Drehpotentiometer gebildet. Alternativ oder zusätzlich kann auch ein Wegsensor vorgesehen sein, der beispielsweise den axialen Verstellweg des Federelements 4 misst.

Schließlich ist auch das durch die Gasdruckfeder gebildete Federelement 4 schematisch dargestellt, das ein Stellelement 5 aufweist. Das Federelement 4 ist durch das Stellelement 5 betätigbar. Vorzugsweise wird das Federelement 4 durch ein Auslöseventil gebildet, wodurch eine erste und eine zweite Gasdruckkammer der Gasdruckfeder miteinander verbindbar sind.

Das Kraftbegrenzungselement 6 ist durch das Auslöseventil selbst gebildet. Damit kann auf ein separates Kraftbegrenzungselement 6 verzichtet werden. In einer ersten Schaltstellung des Stellelements 5 ist das Federelement 4 deaktiviert. Das bedeutet, dass die erste und zweite Gasdruckkammer strömungstechnisch voneinander getrennt sind. Folglich wirkt durch das Federelement 4 auf die erste Befestigungsstelle 12, siehe Fig. 1, keine Axialkraft. Durch die strömungstechnische Trennung der ersten von der zweiten Gasdruckkammer wird ein ungewünschtes Verstellen des Federelements 4 verhindert, so dass das zweite Sitzelement 2 gegenüber dem ersten Sitzelement 1 arretiert ist. Vorzugsweise ist eine zusätzliche Verriegelungseinrichtung vorgesehen, durch die ein ungewünschtes Verstellen des zweiten Sitzelements 2 gegenüber dem ersten Sitzelement 1 verhindert werden kann.

Das Kraftbegrenzungselement 6 ist über eine Steuer- und/oder Regeleinheit 8 betätigbar, wobei die Steuer- und/oder Regeleinheit 8 über eine Bedieneinheit 7 durch den Passagier ansteuerbar ist. Die Steuer- und/oder Regeleinheit 8 ist vorzugsweise durch einen Microcontroller gebildet. Der Passagier kann in diesem Ausführungsbeispiel durch Betätigung der Bedieneinheit 7 ein Signal generieren, das über eine elektronische Verbindung 15 an die Steuer- und/oder Regeleinheit 8 übermittelt wird. So kann beispielsweise durch Betätigung des Bedienelements 7 eine Verstellbewegung des zweiten Sitzelements 2 freigegeben werden.

Vorzugsweise ist auf einem Datenspeicher der Steuer- und/oder Regeleinheit 8 eine Funktion hinterlegt, die eine maximale Verstellgeschwindigkeit vₘₐₓ in Abhängigkeit des Verstellwinkels α angibt. Das ist schematisch durch eine Geschwindigkeitskurve 16 in Fig. 2 dargestellt, die eine maximal zulässige Geschwindigkeit vₘₐₓ in Abhängigkeit des Verstellwinkels α darstellt. Es sei darauf hingewiesen, dass hier die Bezeichnung vₘₐₓ stellvertretend sowohl für translatorische als auch für rotatorische Geschwindigkeiten verwendet wird. Auf der Abszissenachse ist links der Winkel α für eine sitzende Endanschlagposition 17 und rechts der Winkel α für eine liegende Endanschlagposition 18 des zweiten Sitzelements 2 eingezeichnet. Dem Verlauf der Geschwindigkeitskurve ist zu entnehmen, dass sich bei einer Annäherung an die Anschlagpositionen 17 und 18 die maximal zulässige Geschwindigkeit vₘₐₓ reduziert, so dass ein hartes Anschlagen des zweiten Sitzelements 2 in den Endanschlagpositionen 17 und 18 verhindert werden kann. In einer alternativen Ausführungsform kann die Steuerung bzw. Regelung der Verstellbewegung vorzugsweise auch basierend auf einer Beschleunigungskurve, die in Abhängigkeit des Verstellwinkels α die maximal zulässigen Beschleunigungen angibt, erfolgen.

Der Winkelsensor 22 bildet im regelungstechnischen Sinne ein Messglied und ist vorzugsweise dazu eingerichtet, den Verstellwinkel α in Abhängigkeit der Zeit zu messen, so dass durch die Steuer- und/oder Regeleinheit 8 durch eine Ableitung nach der Zeit auch die Geschwindigkeit bzw. die Beschleunigung der Verstellbewegung ermittelt werden kann. In einer alternativen Ausführungsform kann der Sensor 9 auch dazu eingerichtet sein, direkt die Verstellgeschwindigkeit bzw. die Verstellbeschleunigung als Messgrößen an die Steuer- und/oder Regeleinheit 8 zu liefern. Die Übermittlung der Signale des Winkelsensors 22 erfolgt über eine elektronische Verbindung 19.

Die Steuer- und/oder Regeleinheit 8 ist dazu eingerichtet, die tatsächliche Geschwindigkeit mit der zulässigen maximalen Verstellgeschwindigkeit vₘₐₓ zu vergleichen und über eine elektronische Verbindung 20 das Kraftbegrenzungselement 6 entsprechend zu betätigen. Wenn wie in diesem Ausführungsbeispiel das Kraftbegrenzungselement 6 durch das Stellelement 5 gebildet ist, wird bei einem Überschreiten der maximal zulässigen Verstellgeschwindigkeit vₘₐₓ über die elektronische Verbindung 20 von der Steuer- und/oder Regeleinheit 8 eine entsprechende Stellgröße vorzugsweise an einen Servomotor übermittelt, der in Wirkverbindung mit dem Auslöseventil steht und somit dazu eingerichtet ist, die Schaltstellung des Auslöseventils zu bestimmen.

Hat der Passagier die gewünschte Stellung des zweiten Sitzelements 2 eingestellt, so wird diese Information beispielsweise über die Bedieneinheit 7 durch den Passagier an die Steuer- und/oder Regeleinheit 8 übermittelt, was dazu führt, dass über die elektronische Verbindung 20 von der Steuer- und/oder Regeleinheit 8 ein Signal übertragen wird, so dass das Stellelement 5 in die deaktivierte Schaltstellung gebracht wird und so das zweite Sitzelement 2 gegenüber dem ersten Sitzelement 1 arretiert ist.

Ferner kann die Steuer- und/oder Regeleinheit 8 auch als reine Steuereinheit ausgeführt sein. In diesem Fall kann auf die elektronische Verbindung 19 verzichtet werden, und das Kraftbegrenzungselement 6 kann dann beispielsweise in Abhängigkeit einer Schaltstellung der Bedieneinheit 7 gesteuert werden.

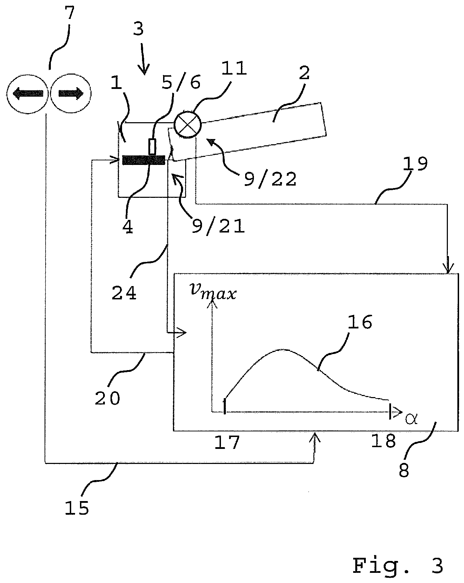

Fig. 3 zeigt einen im Wesentlichen identischen Aufbau des erfindungsgemäßen Flugzeugsitzes 3 wie Fig. 2. Die Bedieneinheit 7 unterscheidet sich von der in Fig. 2 dargestellten Bedieneinheit 7 dadurch, dass von dem Passagier eine Verstellrichtung des zweiten Sitzelements 2 ausgewählt werden kann. Das bedeutet, dass eine Verstellung des zweiten Sitzelements 2 nur in einer von dem Passagier ausgewählten Richtung möglich ist. Eine Detektion der Verstellrichtung des zweiten Sitzelements 2 kann beispielsweise durch den Winkelsensor 22 erfolgen. Alternativ oder zusätzlich kann zur Bestimmung der Verstellrichtung auch ein zusätzlicher Sensor 9 angebracht werden, der vorzugsweise durch einen Kraftsensor 21 gebildet ist und über eine elektronische Verbindung 24 mit der Steuer- und/oder Regeleinheit 8 verbunden ist. Vorzugsweise ist der Kraftsensor 21 derart angeordnet, dass er die von dem zweiten Sitzelement 2 auf das Federelement 4 wirkende Gegenkraft detektieren kann. In Abhängigkeit dieser wirkenden Kraft kann dann durch die Steuer- und/oder Regeleinheit 8 festgestellt werden, in welche Verstellrichtung sich das zweite Sitzelement 2 bewegt.

Die von dem Kraftsensor 21 detektierte Kraft ist insbesondere von der Masse des sich in dem Flugzeugsitz 3 befindlichen Passagiers abhängig, so dass die Steuer- und/oder Regeleinheit 8 vorzugsweise auch dazu eingerichtet ist, in Abhängigkeit der Masse des sitzenden Passagiers kalibriert zu werden.

In einer Abwandlung der in Fig. 3 gezeigten Ausführungsform kann auf eine Vorauswahl der Verstellrichtung über die Bedieneinheit 7 verzichtet werden. Die Steuer- und/oder Regeleinheit 8 ist dann dazu eingerichtet, anhand der durch den Passagier auf das zweite Sitzelement 2 ausgeübten Kraft zu erkennen, in welche Verstellrichtung das zweite Sitzelement 2 verstellt werden soll. Das kann beispielsweise dadurch erfolgen, dass sich das zweite Sitzelement 2 in der aufrechten Stellung befindet und der Passagier für ein vorbestimmtes Zeitintervall mit einer vorbestimmten Kraft gegen das zweite Sitzelement 2 drückt. Diese Gegenkraft wird von dem Kraftsensor 21 erfasst, so dass von der Steuer- und/oder Regeleinheit 8 das Kraftbegrenzungselement 6 bzw. das Stellelement 5 derart betätigt wird, dass eine Verstellung des zweiten Sitzelements 2 möglich ist.

Weiter kann die durch das Federelement 4 auf das zweite Sitzelement 2 wirkende Kraft vorzugsweise durch das Steuer- und/oder Regelelement 8 in Abhängigkeit der durch den Passagier auf das zweite Sitzelement 2 wirkenden Kraft eingestellt werden. Verringert der Passagier die auf das zweite Sitzelement 2 wirkende Kraft, indem er der Verstellbewegung des zweiten Sitzelements 2 nicht weiter folgt, so detektiert die Steuer- und/oder Regeleinheit 8, dass eine weitere Verstellbewegung nicht mehr erwünscht ist. Es erfolgt dann eine Arretierung des zweiten Sitzelements 2. Der Passagier kann dann in gewohnter Weise wieder das zweite Sitzelement 2 in der Liegeposition belasten, ohne dass es zu einer Verstellung des zweiten Sitzelements 2 kommt. Auch hier kann die Steuer- und/oder Regeleinheit 8 dazu eingerichtet sein, vorzugsweise in Abhängigkeit der Masse des Passagiers kalibriert zu werden.

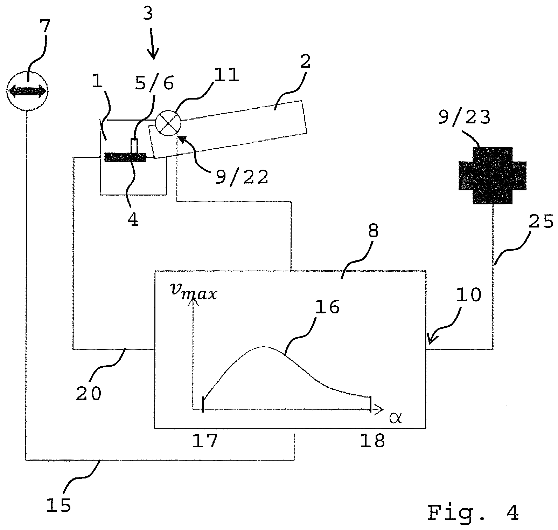

In Fig. 4 ist eine weitere Ausführungsform des erfindungsgemäßen Flugzeugsitzes 3 gezeigt, der im Wesentlichen den gleichen Grundaufbau wie der Flugzeugsitz 3 in der Ausführungsform aus Fig. 2 zeigt. Zusätzlich weist diese Ausführungsform eine Schnittstelle 10 zum Empfangen externer Signale auf. Mit externen Signalen sind Signale bzw. Messgrößen gemeint, die nicht durch den Flugzeugsitz 3 selbst generiert werden oder eine Zustandsgröße des Flugzeugsitzes 3 enthalten.

Vorzugsweise ist die Schnittstelle 10 über eine elektronische Verbindung 25 mit einem Sensor 9 verbunden, der vorzugsweise durch einen Beschleunigungssensor 23 gebildet ist. Der Beschleunigungssensor 23 ist vorzugsweise dazu eingerichtet, Beschleunigungen des Luftfahrzeugs zu detektieren. Es kann so festgestellt werden, ob sich das Luftfahrzeug in einer kritischen Flugphase befindet, beispielsweise wenn im Flug Turbulenzen auftreten.

Die Steuer- und/oder Regeleinheit 8 ist dazu eingerichtet, das externe Signal derart zu verarbeiten, dass die Verstellung des zweiten Sitzelements 2 nicht mehr bzw. nur noch in einer vordefinierten Richtung möglich ist. In letzterem Fall wäre vorzugsweise nur eine Verstellbewegung aus der Liegeposition in die sicherere Sitzposition möglich.

Alternativ oder zusätzlich kann die Schnittstelle 10 vorzugsweise auch mit einem bordeigenen System des Luftfahrzeugs verbunden sein. Es können damit im bordeigenen System vorhandene Informationen, beispielsweise über die Flugphasen, übermittelt werden. Darüber könnte die Steuer- und/oder Regeleinheit beispielsweise die Information darüber empfangen, ob sich das Luftfahrzeug in der Start- oder Landephase befindet. Vorzugsweise könnte über die Schnittstelle 10 ein Signal empfangen werden, das anzeigt, ob in dem Luftfahrzeug die Anschnallzeichen aktiviert sind. Somit könnte die Verstellbarkeit des zweiten Sitzelements 2 auch an die Aktivierung bzw. Deaktivierung der Anschnallzeichen gekoppelt sein.

Vorzugsweise kann ein Blockieren der Verstellbewegung durch ein externes Signal, das über die Schnittstelle 10 an die Steuer- und/oder Regeleinheit 8 übermittelt wird, über ein Anzeigeelement an dem Flugzeugsitz 3 angezeigt werden. Weiter vorzugsweise erfolgt dies über ein akustisches und/oder optisches Signal, wobei insbesondere vorzugsweise eine optische Anzeige, beispielsweise eine LED, in dem Bedienelement 7 integriert ist. Durch diese Anzeige wird dem Passagier angezeigt, dass keine Fehlfunktion des Flugzeugsitzes 3 vorliegt, sondern eine Verstellung aufgrund äußerer Umstände aktuell nicht möglich ist. Instandhaltungsmaßnahmen, die durch unbegründete Beanstandungen hervorgerufen werden, können so verringert werden.

## Patentansprüche

1. Flugzeugsitz (3) mit
- einem ersten und einem zweiten Sitzelement (1, 2), wobei
- das zweite Sitzelement (2) gegenüber dem ersten Sitzelement (1) verstellbar gelagert ist, wobei
- ein das zweite Sitzelement (2) gegenüber dem ersten Sitzelement (1) bewegendes Federelement (4) vorgesehen ist, wobei
- durch ein Stellelement (5) die durch das Federelement (4) auf das zweite Sitzelement (2) wirkende Kraft freigebbar ist, so dass in einer ersten Schaltstellung des Stellelements (5) das Federelement (4) deaktiviert ist und in einer zweiten Schaltstellung des Stellelements (5) das Federelement (4) aktiviert ist, **dadurch gekennzeichnet, dass**
- ein Kraftbegrenzungselement (6) vorgesehen ist, mit dem die durch das Federelement (4) auf das zweite Sitzelement (2) wirkende Kraft auf einen vorbestimmten Wert begrenzbar ist, so dass auch Zwischenzustände zwischen der ersten und der zweiten Schaltstellung einstellbar sind, wobei
- eine elektronische Steuer-/Regeleinheit (8) vorgesehen ist, die dazu eingerichtet ist, das Kraftbegrenzungselement (6) zu betätigen, wobei
- das Kraftbegrenzungselement (6) durch die Steuer-/Regeleinheit (8) in Abhängigkeit der Verstellposition, der Verstellgeschwindigkeit und/oder der Verstellbeschleunigung des zweiten Sitzelements (2) betätigbar ist.

2. Flugzeugsitz (3) nach Anspruch 1, **dadurch gekennzeichnet, dass**
- das Kraftbegrenzungselement (6) durch das Stellelement (5) gebildet ist.

3. Flugzeugsitz (3) nach einem der vorangehenden Ansprüche, **dadurch gekennzeichnet, dass**
- in der ersten Schaltstellung des Stellelements (5) eine Bewegung des ersten Sitzelements (1) gegenüber dem zweiten Sitzelement (2) blockiert ist.

4. Flugzeugsitz (3) nach einem der vorangehenden Ansprüche, **dadurch gekennzeichnet, dass**
- eine zusätzliche Verriegelungseinrichtung vorgesehen ist, durch die die Bewegung des zweiten Sitzelements (2) gegenüber dem ersten Sitzelement (1) blockierbar ist.

5. Flugzeugsitz (3) nach einem der vorangehenden Ansprüche, **dadurch gekennzeichnet, dass**
- das Kraftbegrenzungselement (6) dazu eingerichtet ist, der durch das Federelement (4) auf das zweite Sitzelement (2) wirkenden Kraft entgegenzuwirken.

6. Flugzeugsitz (3) nach einem der vorangehenden Ansprüche, **dadurch gekennzeichnet, dass**
- das Kraftbegrenzungselement (6) über eine Bedieneinheit (7) elektrisch betätigbar ist.

7. Flugzeugsitz (3) nach einem der vorangehenden Ansprüche, **dadurch gekennzeichnet, dass**
- die Steuer-/Regeleinheit (8) mit wenigstens einem Sensor (9) verbunden ist, der Zustandsgrößen des Flugzeugsitzes (3) erfasst.

8. Flugzeugsitz (3) nach Anspruch 7, **dadurch gekennzeichnet, dass**
- der Sensor (9) durch einen Winkelsensor (22), einen Wegsensor, einen Kraftsensor (21) und/oder einen Beschleunigungssenor (23) gebildet ist.

9. Flugzeugsitz (3) nach einem der vorangehenden Ansprüche, **dadurch gekennzeichnet, dass**
- die Steuer-/Regeleinheit (8) eine Schnittstelle (10) zum Empfangen von externen Signalen aufweist.

10. Flugzeugsitz (3) nach Anspruch 9, **dadurch gekennzeichnet, dass**
- die Schnittstelle (10) mit einem Näherungssensor verbunden ist.

11. Flugzeugsitz (3) nach einem der vorangehenden Ansprüche, **dadurch gekennzeichnet, dass**
- das Kraftbegrenzungselement (6) durch die Steuer-/Regeleinheit (8) derart betätigbar ist, dass eine Bewegung des Federelements (4) nur in eine vordefinierbare Richtung möglich ist.

12. Verfahren zum Verstellen eines Flugzeugsitzes (3) mit
- einem ersten und einem zweiten Sitzelement (1, 2), wobei
- das zweite Sitzelement (2) gegenüber dem ersten Sitzelement (1) verstellbar gelagert ist, wobei
- ein das zweite Sitzelement (2) gegenüber dem ersten Sitzelement (1) bewegendes Federelement (4) vorgesehen ist, wobei
- durch ein Stellelement (5) die durch das Federelement (4) auf das zweite Sitzelement (2) wirkende Kraft freigegeben wird, so dass in einer ersten Schaltstellung des Stellelements (5) das Federelement (4) deaktiviert und in einer zweiten Schaltstellung des Stellelements (5) das Federelement (4) aktiviert wird, **dadurch gekennzeichnet, dass**
- die durch das Federelement (4) auf das zweite Sitzelement (2) wirkende Kraft mittels eines Kraftbegrenzungselements (6) auf einen vorbestimmten Wert begrenzt wird, so dass auch Zwischenzustände zwischen der ersten und der zweiten Schaltstellung einstellbar sind, wobei
- eine elektronische Steuer-/Regeleinheit (8) vorgesehen ist, über die das Kraftbegrenzungselement (6) betätigt wird, wobei
- das Kraftbegrenzungselement (6) durch die Steuer-/Regeleinheit (8) in Abhängigkeit der Verstellposition, der Verstellgeschwindigkeit und/oder der Verstellbeschleunigung des zweiten Sitzelements (2) betätigt wird.

## Claims

1. Aircraft seat (3) comprising
- a first and a second seat element (1, 2),
- the second seat element (2) being mounted so as to be adjustable relative to the first seat element (1),
- a spring element (4) that moves the second seat element (2) relative to the first seat element (1) being provided,
- it being possible for the force acting on the second seat element (2) by means of the spring element (4) to be released by an actuating element (5) such that the spring element (4) is deactivated in a first switching position of the actuating element (5), and the spring element (4) is activated in a second switching position of the actuating element (5), **characterised in that**
- a force limitation element (6) is provided, by means of which the force acting on the second seat element (2) by means of the spring element (4) can be limited to a predetermined value such that intermediate states between the first and second switching positions can also be set, wherein
- an electronic open-loop/closed-loop control unit (8) is provided, which is designed to operate the force limitation element (6), wherein
- the force limitation element (6) can be operated by the open-loop/closed-loop control unit (8) on the basis of the adjustment position, the adjustment speed and/or the adjustment acceleration of the second seat element (2).

2. Aircraft seat (3) according to claim 1, **characterised in that**
- the force limitation element (6) is formed by the actuating element (5).

3. Aircraft seat (3) according to any of the preceding claims, **characterised in that**,
- in the first switching position of the actuating element (5), movement of the first seat element (1) relative to the second seat element (2) is blocked.

4. Aircraft seat (3) according to any one of the preceding claims, **characterised in that**
- an additional securing device is provided, by means of which the movement of the second seat element (2) relative to the first seat element (1) can be blocked.

5. Aircraft seat (3) according to any one of the preceding claims, **characterised in that**
- the force limitation element (6) is designed to act counter to the force acting on the second seat element (2) by means of the spring element (4).

6. Aircraft seat (3) according to any one of the preceding claims, **characterised in that**
- the force limitation element (6) can be electrically operated by means of an operating unit (7).

7. Aircraft seat (3) according to any one of the preceding claims, **characterised in that**
- the open-loop/closed-loop control unit (8) is connected to at least one sensor (9) that captures state variables of the aircraft seat (3).

8. Aircraft seat (3) according to claim 7, **characterised in that**
- the sensor (9) is formed by an angle sensor (22), a path sensor, a force sensor (21) and/or an acceleration sensor (23).

9. Aircraft seat (3) according to any one of the preceding claims, **characterised in that**
- the open-loop/closed-loop control unit (8) comprises an interface (10) for receiving external signals.

10. Aircraft seat (3) according to claim 9, **characterised in that**
- the interface (10) is connected to a proximity sensor.

11. Aircraft seat (3) according to any of the preceding claims , **characterised in that**
- the force limitation element (6) can be operated by the open-loop/closed-loop control unit (8) such that the spring element (4) can be moved only in a predefinable direction.

12. Method for adjusting an aircraft seat (3) comprising
- a first and a second seat element (1, 2),
- the second seat element (2) being mounted so as to be adjustable relative to the first seat element (1),
- a spring element (4) that moves the second seat element (2) relative to the first seat element (1) being provided,
- the force acting on the second seat element (2) by means of the spring element (4) being released by an actuating element (5) such that the spring element (4) is deactivated in a first switching position of the actuating element (5), and the spring element (4) is activated in a second switching position of the actuating element (5), **characterised in that**
- the force acting on the second seat element (2) by means of the spring element (4) is limited to a predetermined value by means of the force limitation element (6) such that intermediate states between the first and the second switching positions can also be set, wherein
- an electronic open-loop/closed-loop control unit (8) is provided, which is designed to operate the force limitation element (6), wherein
- the force limitation element (6) can be operated by the open-loop/closed-loop control unit (8) on the basis of the adjustment position, the adjustment speed and/or the adjustment acceleration of the second seat element (2).

## Revendications

1. Siège d'aéronef (3) comportant
- un premier et un second élément de siège (1, 2), dans lequel
- le second élément de siège (2) est monté ajustable par rapport au premier élément de siège (1), dans lequel
- un élément élastique (4) déplaçant le second élément de siège (2) par rapport au premier élément de siège (1) est prévu, dans lequel
- la force agissant sur le second élément de siège (2) par le biais de l'élément élastique (4) peut être libérée par un élément d'actionnement (5) de telle sorte que, dans une première position de commutation de l'élément d'actionnement (5), l'élément élastique (4) est désactivé et, dans une seconde position de commutation de l'élément d'actionnement (5), l'élément élastique (4) est activé, **caractérisé en ce que**
- un élément de limitation de force (6) est prévu, avec lequel la force agissant sur le second élément de siège (2) par le biais de l'élément élastique (4) peut être limitée à une valeur prédéterminée, de telle sorte que des états intermédiaires entre la première et la seconde position de commutation peuvent également être réglés, dans lequel
- une unité de contrôle/régulation (8) électronique est prévue, qui est configurée pour actionner l'élément de limitation de force (6), dans lequel
- l'élément de limitation de force (6) peut être actionné par l'unité de contrôle/régulation (8) en fonction de la position d'ajustage, la vitesse d'ajustage et/ou l'accélération d'ajustage du second élément de siège (2).

2. Siège d'aéronef (3) selon la revendication 1, **caractérisé en ce que**
- l'élément de limitation de force (6) est formé par l'élément d'actionnement (5).

3. Siège d'aéronef (3) selon l'une des revendications précédentes, **caractérisé en ce que**
- dans la première position de commutation de l'élément d'actionnement (5), un déplacement du premier élément de siège (1) par rapport au second élément de siège (2) est bloqué.

4. Siège d'aéronef (3) selon l'une des revendications précédentes, **caractérisé en ce que**
- un dispositif de verrouillage supplémentaire est prévu, par lequel le déplacement du second élément de siège (2) par rapport au premier élément de siège (1) peut être bloqué.

5. Siège d'aéronef (3) selon l'une des revendications précédentes, **caractérisé en ce que**
- l'élément de limitation de force (6) est configuré pour agir contre la force agissant sur le second élément de siège (2) par le biais de l'élément élastique (4).

6. Siège d'aéronef (3) selon l'une des revendications précédentes, **caractérisé en ce que**
- l'élément de limitation de force (6) peut être actionné de manière électrique par le biais d'une unité de commande (7).

7. Siège d'aéronef (3) selon l'une des revendications précédentes, **caractérisé en ce que**
- l'unité de contrôle/régulation (8) est raccordée à au moins un capteur (9), qui détecte des grandeurs d'état du siège d'aéronef (3).

8. Siège d'aéronef (3) selon la revendication 7, **caractérisé en ce que**
- le capteur (9) est formé par un capteur angulaire (22), un capteur de course, un capteur de force (21) et/ou un capteur d'accélération (23).

9. Siège d'aéronef (3) selon l'une des revendications précédentes, **caractérisé en ce que**
- l'unité de contrôle/régulation (8) présente une interface (10) pour recevoir des signaux externes.

10. Siège d'aéronef (3) selon la revendication 9, **caractérisé en ce que**
- l'interface (10) est raccordée à un capteur de proximité.

11. Siège d'aéronef (3) selon l'une des revendications précédentes, **caractérisé en ce que**
- l'élément de limitation de force (6) peut être actionné par l'unité de contrôle/régulation (8) de telle manière qu'un déplacement de l'élément élastique (4) n'est possible que dans une direction pouvant être prédéfinie.

12. Procédé d'ajustage d'un siège d'aéronef (3) comportant
- un premier et un second élément de siège (1, 2), dans lequel
- le second élément de siège (2) est monté ajustable par rapport au premier élément de siège (1), dans lequel
- un élément élastique (4) déplaçant le second élément de siège (2) par rapport au premier élément de siège (1) est prévu, dans lequel
- la force agissant sur le second élément de siège (2) par le biais de l'élément élastique (4) est libérée par un élément d'actionnement (5) de telle sorte que, dans une première position de commutation de l'élément d'actionnement (5), l'élément élastique (4) est désactivé et, dans une seconde position de commutation de l'élément d'actionnement (5), l'élément élastique (4) est activé, **caractérisé en ce que**
- la force agissant sur le second élément de siège (2) par le biais de l'élément élastique (4) est limitée à une valeur prédéterminée au moyen d'un élément de limitation de force (6), de telle sorte que des états intermédiaires entre la première et la seconde position de commutation peuvent également être réglés, dans lequel
- une unité de contrôle/régulation (8) électronique est prévue, par le biais de laquelle l'élément de limitation de force (6) est actionné, dans lequel
- l'élément de limitation de force (6) est actionné par l'unité de contrôle/régulation (8) en fonction de la position d'ajustage, la vitesse d'ajustage et/ou l'accélération d'ajustage du second élément de siège (2).
